# EUROPEAN PATENT APPLICATION

(11) **EP 1 777 833 A2**
(43) Date of publication of application: **25.04.2007**
(21) Application number: 06121414.4
(22) Date of filing: 28.09.2006
(51) Int. Cl.: H04B 1/40

(54) **Local oscillation frequency generation apparatus and wireless transceiver having the same**

(30) Priority: 21.10.2005 KR 20050099738
(71) Applicant: SAMSUNG ELECTRONICS CO., LTD., Suwon-si Gyeonggi-do 442-742 (KR)
(72) Inventor: Kim, Dae-yeon, Suwon-si (KR); Kang, Hyun-koo, Yongin-si (KR); Kim, Hee-seung, Suwon-si (KR)
(74) Representative: Waddington, Richard

(57) **Abstract**

A multiple local oscillation frequency generation apparatus (230) which can generate local oscillation frequencies in at least two frequency bands and a wireless transceiver having the multiple local oscillation frequency generation apparatus (230) are provided. The local oscillation frequency generation apparatus (230) includes: an oscillation unit (232) which comprises a plurality of VCOs that provide at least two local oscillation signals having different frequencies for modulating/demodulating RF signals in at least two frequency bands; a PLL (231) which locks the frequencies of the local oscillation signals provided by the VCOs; a first switch (233) which selects one of the local oscillation signal provided the VCOs according to a frequency band of a RF signal; a frequency conversion unit (234) which converts the frequency of the selected local oscillation signal ; and a phase shift unit (237) which generates I-phase and Q-phase local oscillation signals by shifting the phase of a signal output by the frequency conversion unit (234).

## Description

Apparatuses consistent with the present invention relate to a wireless transceiver, and more particularly to, a multiple local oscillation frequency generation apparatus which can generate at least two local oscillation frequencies belonging to different frequency bands and a wireless transceiver having the multiple local oscillation frequency generation apparatus.

In general, frequency conversion methods adopted by wireless transceivers are classified into a direct conversion method and a super heterodyne method. In the super heterodyne method, a radio frequency (RF) is converted into an intermediate frequency (IF), and the IF is converted into a baseband frequency (BF). Since the super heterodyne method requires a plurality of mixers or surface acoustic wave (SAW) filters for converting an input RF into an IF, it is difficult to implement the super heterodyne method as a single chip.

Recently, in order to address this problem associated with the super heterodyne method, the direct conversion method in which an RF is directly converted into a BF without the need to be converted into an IF has been widely adopted. It is relatively easy to implement the direct conversion method as a single chip including a plurality of devices for wireless communication. In addition, the manufacturing cost of wireless transceivers adopting the direct conversion method is relatively low, and such wireless transceivers consume less power.

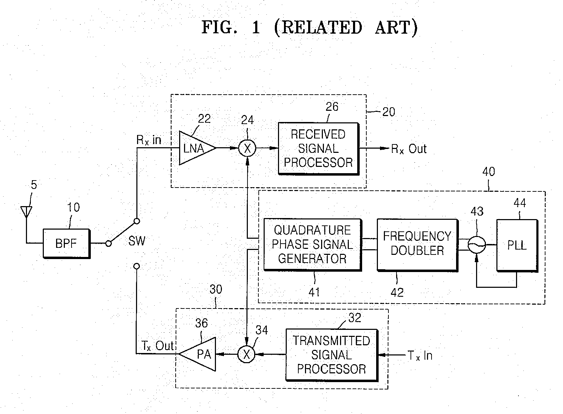

FIG. 1 is a circuit diagram of a related art wireless transceiver having the direct conversion method. Referring to FIG. 1, the related art wireless transceiver includes an antenna 5, a band pass filter (BPF) 10, a receiver 20, a transmitter 30, and a local oscillation frequency generator 40. A frequency of a local oscillation signal generated by the local oscillation frequency generator 40 for modulating a baseband signal or demodulating an RF signal will hereinafter be referred to as a local oscillation frequency.

The receiver 20 includes a low noise amplifier (LNA) 22, a demodulator 24, and a received signal processor 26. The transmitter 30 includes a transmitted signal processor 32, a modulator 34, and a power amplifier (PA) 36.

The local oscillation frequency generator 40 includes a quadrature phase signal generator 41, a frequency doubler 42, a voltage controlled oscillator (VCO) 43, and a phase locked loop (PLL) 44. The PLL 44 oscillates the VCO 43 with half of a local oscillation frequency fLO which is needed for driving the demodulator 24 and the modulator 34. The frequency of a signal output from the VCO 43 is doubled by the frequency doubler 42. The quadrature phase signal generator 41 outputs an in-phase (I) local oscillation signal and a quadrature-phase (Q) local oscillation signal through phase formation and provides the I local oscillation signal and the Q local oscillation signal to the demodulator 24 and the modulator 34.

A method in which the related art wireless transceiver receives an RF signal will now be described. An RF signal received via the antenna 5 is weak. Thus, the received RF signal is amplified by the LNA 22, and the amplified RF signal is down-converted by the demodulator 24. Here, the demodulator 24 mixes the received RF signal with a local oscillation signal provided by the local oscillation frequency generator 30 and then down-converts the mixed result. Therefore, the down-converted result has a frequency which amounts to a difference between the local oscillation frequency fLO and a frequency fRF of the received signal. In the direct conversion method which does not involve the use of an IF, the local oscillation frequency fLO is identical to the received RF signal frequency fRF. The down-converted RF signal is amplified and filtered by the received signal processor 26 so that a baseband signal is output from the received signal processor 26. The received signal processor 26 is an analog processing block including a variable gain amplifier (not shown), a low pass filter (not shown), and an output buffer (not shown). The variable gain amplifier of the received signal processor 26 may be implemented as a single stage or multiple stages according to a desired amplitude to which signals are to be amplified.

A method in which the related art wireless transceiver transmits an RF signal will now be described. The transmitted signal processor 32 filters, amplifies, and outputs a baseband signal. The modulator 34 mixes the baseband signal output from the transmitted signal processor 32 with the local oscillation signal provided by the local oscillation frequency generator 40 and up-converts the mixed result, thereby obtaining an RF signal. The power amplifier 36 amplifies the RF signal to an appropriate level, and the amplified RF signal is transmitted through the band pass filter 10 and the antenna 5.

In general, different types of wireless transceivers, for example, wireless local area network (WLAN) devices, Wireless Broadband Internet (Wi-Bro) devices, and Bluetooth devices, have different operating frequency bands. Specifically, related art wireless transceivers are all required to operate in conformity with one of the operating frequency bands, and thus, they may not be able to be provided with various services such as communication and satellite broadcast services and wireless Internet services provided in different frequency bands. In addition, conventionally, in order to receive services associated with a plurality of frequency bands, a wireless transceiver must include a plurality of local oscillation frequency generators which can generate a plurality of local oscillation signals respectively corresponding to the frequency bands, which results in an increase in the manufacturing cost and size of wireless transceivers.

The present invention provides a local oscillation frequency generation apparatus which can generate at least two local oscillation frequencies belonging to different frequency bands and a wireless transceiver having the local oscillation frequency generation apparatus.

According to the present invention there is provided an apparatus and method as set forth in the appended claims. Preferred features of the invention will be apparent from the dependent claims, and the description which follows.

According to an aspect of the present invention, there is provided a local oscillation frequency generation apparatus in a wireless communication device. The local oscillation frequency generation apparatus includes: an oscillation unit which comprises a plurality of VCOs that are operable to provide at least two local oscillation signals having different frequencies for modulating and/or demodulating RF signals in at least two frequency bands; a PLL which is operable to lock the frequencies of the local oscillation signals provided by the VCOs; a first switch which is operable to choose one of the VCOs according to a frequency band of a predetermined RF signal; a frequency conversion unit which is operable to convert the frequency of a local oscillation signal provided by the VCO chosen by the first switch; a phase shift unit which is operable to generate an I-phase local oscillation signal and a Q-phase local oscillation signal by shifting the phase of a signal output by the frequency conversion unit and to output the I-phase local oscillation signal and the Q-phase local oscillation signal; and a control unit which is operable to control the oscillation unit, the PLL, the first switch, the frequency conversion unit, and the phase shift unit.

According to another aspect of the present invention, there is provided a wireless transceiver. The wireless transceiver includes an antenna which is operable to transmit and/or receive RF signals in at least two frequency bands; a reception unit which is operable to receive an RF signal received by the antenna and to output a baseband signal; a transmission unit which is operable to convert the baseband signal into an RF signal and to transmit the RF signal to outside the wireless transceiver; a local oscillation frequency generation apparatus which is operable to output at least two local oscillation signals having different frequencies, the local oscillation signals comprising a local oscillation signal belonging to the same frequency band as the RF signal received by the reception unit or a local oscillation signal belonging to the same frequency band as the RF signal transmitted by the transmission unit; and a control unit which is operable to control the antenna, the reception unit, the transmission unit, and the local oscillation frequency generation apparatus.

For a better understanding of the invention, and to show how embodiments of the same may be carried into effect, reference will now be made, by way of example, to the accompanying diagrammatic drawings in which:
FIG. 1 is a circuit diagram of a related art wireless transceiver adopting a direct conversion method;
FIG. 2 is a circuit diagram of a wireless transceiver having a local oscillation frequency generation apparatus according to an exemplary embodiment of the present invention; and
FIG. 3 is a block diagram of the local oscillation frequency generation apparatus of FIG. 2;
FIG. 4 is a circuit diagram illustrating a method of mixing a local oscillation signal and an RF signal which is performed in a demodulator of FIG. 2, according to an exemplary embodiment of the present invention;
FIG. 5 is a diagram illustrating a method of converting a received RF signal into a baseband signal which is performed by a wireless transceiver according to an exemplary embodiment of the present invention; and
FIG. 6 is a diagram illustrating a method of converting a baseband signal into an RF signal to be transmitted which is performed by a wireless transceiver according to an exemplary embodiment of the present invention.

The present invention will now be described more fully with reference to the accompanying drawings in which exemplary embodiments of the invention are shown.

A local oscillation frequency generation apparatus according to an exemplary embodiment of the present invention is an apparatus for generating and outputting a local oscillation signal having the same frequency as a desired RF signal such that the transmission/reception of RF signals can be carried out in at least two wireless frequency bands. For example, the local oscillation frequency generation apparatus can provide not only local oscillation signals of a 5 GHz frequency band required by 5 GHz WLAN devices but also local oscillation signals of a 2 GHz frequency band required by 2 GHz WLAN devices, Wi-Bro devices, Bluetooth devices, and satellite digital multimedia broadcasting (DMB) tuners.

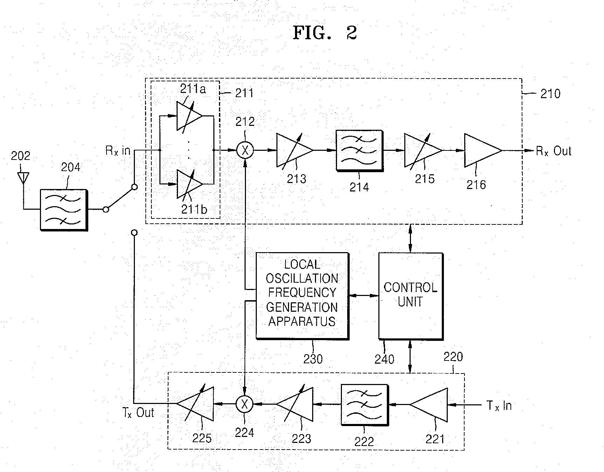

FIG. 2 is a circuit diagram of a wireless transceiver having a local oscillation frequency generation apparatus 230 according to an exemplary embodiment of the present invention. For convenience, it will now be assumed that the wireless transceiver adopts a direct conversion method. However, it is obvious to one of ordinary skill in the art that the present invention can also be applied to a wireless transceiver adopting a heterodyne method. A frequency of a local oscillation signal generated by the local oscillation frequency generation apparatus 230 for modulating a baseband signal or demodulating an RF signal will now be referred to as a local oscillation frequency.

Referring to FIG. 2, the wireless transceiver includes a reception unit 210 which receives a signal via an antenna 202 and outputs a baseband signal, a transmission unit 220 which converts the baseband signal into an RF signal and outputs the RF signal to outside the wireless transceiver via the antenna 202, the local oscillation frequency generation apparatus 230 which outputs a local oscillation signal having the same frequency as an RF signal received by the reception unit 210 or an RF signal transmitted by the transmission unit 220, and a control unit 240 which controls the reception unit 210, the transmission unit 220, and the local oscillation frequency generation apparatus 230.

The reception unit 210 includes a low noise amplification unit 211, a demodulator 212, at least one voltage controlled amplifier 213 and/or 215, a low band pass filter 214, and an output buffer 216.

The low noise amplification unit 211 includes a plurality of first and second low noise amplifiers 211a through 211b which are respectively set to at least two frequency bands and amplify a received RF signal. For example, the first low noise amplifier 211a may be an amplifier which amplifies RF signals belonging to a 2 GHz band, and the second low noise amplifier 211b may be an amplifier which amplifies RF signals belonging to a 5 GHz band. The low noise amplification unit 211 may have a gain control function. The low noise amplification unit 211 may comprise a single broadband low noise amplifier capable of processing broadband frequency signals, instead of comprising a plurality of low noise amplifiers as illustrated in FIG. 2.

The demodulator 212 mixes an RF signal amplified by the low noise amplification unit 211 with a local oscillation signal provided by the local oscillation frequency generation apparatus 230, thereby obtaining a baseband signal.

The level of the baseband signal obtained by the demodulator 212 is controlled by the voltage controlled amplifiers 213 and 215. The reception unit 210 is illustrated in FIG. 2 as comprising two voltage controlled amplifiers. However, the reception unit 210 may comprise a single voltage controlled amplifier or more than two voltage controlled amplifiers. The low band pass filter 214 removes high frequency noise from a baseband signal output by the voltage gain amplifier 213, and the output buffer 216 buffers the baseband signal which has been low-band-pass-filtered by the low band pass filter 214 and outputs the buffered baseband signal. The cut-off frequency of the low band pass filter 214 may be set according to the frequency band of received RF signals and RF signals to be transmitted and the bandwidth of baseband signals. The voltage controlled amplifiers 213 and 215 and the low band pass filter 214 may be arranged in a different order from the one illustrated in FIG. 2.

The transmission unit 220 includes a level shifter 221, a low band pass filter 222, a voltage controlled amplifier 223, a modulator 224, and a power amplifier 225.

The level shifter 221 is a type of input buffer which adjusts the common mode level of transmitted signals. The low band pass filter 222 removes high frequency noise from a transmitted signal output by the level shifter 221. The voltage controlled amplifier 223 adjusts the level of a signal output by the low band pass filter 222 to such an appropriate level that the signal can be properly transmitted. The modulator 224 mixes a signal output by the voltage controlled amplifier 223 with a local oscillation signal provided by the local frequency generation apparatus 230, thereby obtaining an RF signal. The RF signal obtained by the modulator 224 is amplified by the power amplifier 225, and the amplified RF signal is transmitted through the band pass filter 203 and the antenna 202.

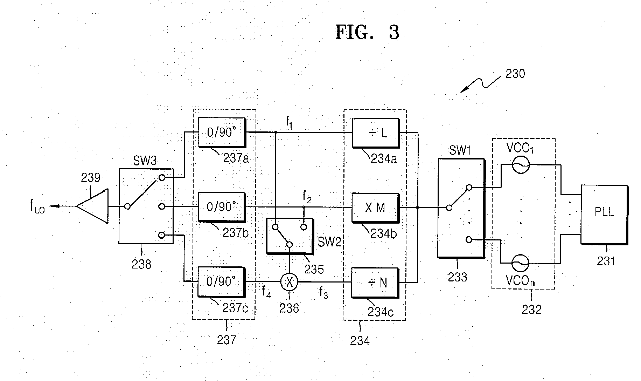

FIG. 3 is a block diagram of the local oscillation frequency generation apparatus 230 of FIG. 2. Referring to FIG. 3, the local oscillation frequency generation apparatus 230 includes a phase locked loop 231, an oscillation unit 232, a first switch 233, a frequency conversion unit 234, a second switch 235, a multiplier 236, a phase shift unit 237, a third switch 238, and an output buffer 239.

The oscillation unit 232 includes a plurality of first through n-th VCOs VC01 through VCOn which are connected in parallel between the PLL 231 and the first switch 233 and can provide local oscillation signals having different frequencies in accordance with the frequency band of an RF signal received by the reception unit 210 or transmitted by the transmission unit 220, thereby enabling the modulation or demodulation of RF signals belonging to at least two different bands. One of local oscillation signals output by the first through n-th VCOs VCO1 through VCOn is selected according to the frequency band of a required RF signal, thereby generating a local oscillation signal for the required RF signal. A wireless transceiver needs a plurality of local oscillation signals having different frequencies to use different frequency bands. Therefore, according to the current exemplary embodiment of the present invention, a plurality of local oscillation signals having different frequencies are provided by a plurality of VCOs, and the frequency of each of the local oscillation signals is appropriately converted, thereby providing a wireless transceiver with a local oscillation signal needed for modulating/demodulating an RF signal.

For example, RF signals having a frequency of 4.9 - 5.9 GHz and baseband signals having a bandwidth of 8.3 MHz are used in a 5 GHz WLAN; RF signals having a frequency of about 2.6 GHz and baseband signals having a bandwidth of 8.242 MHz are used in satellite DMB; RF signals having a frequency of 2.3 - 2.9 GHz and baseband signals having a bandwidth of 4.5 MHz (RF channels having a bandwidth of 9 MHz) are used in Wi-Bro; and RF signals having a frequency of 2.4 - 2.5 GHz and channels having a bandwidth of 5 - 20 MHz are used in a 2.4 GHz WLAN. In this regard, the frequency band of RF signals may vary from one wireless transceiver from another, and thus, there is the need to vary the frequency of local oscillation signals needed for modulating or demodulating RF signals according to the frequency band of the RF signals. Conventionally, a local oscillation frequency generation unit of a wireless transceiver provides only one local oscillation frequency. On the other hand, the local oscillation frequency generation apparatus 230 can provide a variety of local oscillation frequencies.

The PLL 231 locks the frequency of a local oscillation signal generated by the oscillation unit 232.

The first switch 233 chooses one of the first through n-th VCOs VCO1 through VCOn according to the frequency band of a received RF signal or an RF signal to be transmitted.

The frequency conversion unit 234 converts the frequency of a local oscillation signal selected by the first switch 233 into a local oscillation signal having a predetermined local oscillation frequency needed for modulating/demodulating an RF signal by performing a predetermined operation. The frequency conversion unit 234 may include: at least one frequency doubler which multiplies the frequency of the local oscillation signal selected by the first switch 233 by a predetermined number; and at least one divider which divides the frequency of the local oscillation signal selected by the first switch 233 by a predetermined number.

For example, the frequency conversion unit 234 may include: a first divider 234a which the frequency of the local oscillation signal selected by the first switch 233 by an integer L; a second divider 234c which divides the frequency of the local oscillation signal selected by the first switch 233 by an integer N; and a frequency doubler 234b which multiplies the frequency of the local oscillation signal selected by the first switch 233 by an integer M. The operation of the frequency conversion unit 234 will now be described in detail.

If one of the local oscillation signals generated by the VCOs VC01 through VCOn is selected by the first switch according to the frequency band of a predetermined RF signal, the frequency of the selected local oscillation signal may be converted by the first divider 234a, the second divider 234c, and the frequency doubler 234b, and the frequency-converted results may be output. For example, if the local oscillation signal selected by the first switch 233 has a frequency fPLL, the first divider 234a outputs a signal having a frequency f₁ = fPLL/L which is obtained by dividing the frequency fPLL by the integer L, the second divider 234c outputs a signal having a frequency f₃ = fPLL/N which is obtained by dividing the frequency fPLL/L by the integer N, and the frequency doubler 234b outputs a signal having a frequency f₂ = fPLL×M which is obtained by multiplying the frequency fPLL by the integer M.

One of the signals output by the first divider 234a and the frequency doubler 234b may be selected by the second switch 235, and the multiplier 236 may multiply the signal selected by the second switch by the signal output by the second divider 234c, thereby obtaining another frequency-converted signal of the local oscillation signal selected by the first switch 233.

The signals output by the first divider 234a, the second divider 234c, and the multiplier 236 are input to respective phase shifters 237a, 237b and 237c of the phase shift unit 237 and phase-shifted into an I local oscillation signal and a Q local oscillation signal by the phase shifters 237a, 237b and 237c. The third switch selects an I local oscillation signal and a Q local oscillation signal output by one of the phase shifters 237a, 237b and 237c and outputs the selected I and Q local oscillation signals to the demodulator 212 or the modulator 214.

In short, the frequency conversion unit 234 includes at least one divider and a frequency doubler and can thus generate a plurality of local oscillation signals having different frequencies by directly outputting output signals of the divider and the frequency doubler or appropriately mixing the output signals of the divider and the frequency doubler.

The first, second and third phase shifters of 237a, 237b and 237c of the phase shift unit 237 shift the phase of each of the signals output by the frequency conversion unit 234, thereby obtaining an I local oscillation signal and a Q local oscillation signal. The output buffer 239 buffers a phase-shifted local oscillation signal which is output by the phase shift unit 237 and selected by the third switch 278, and provides the buffered local oscillation signal to the demodulator 212 or the modulator 214.

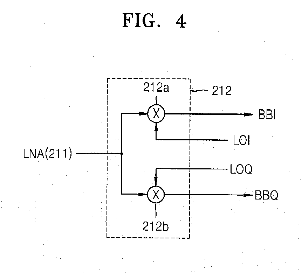

FIG. 4 is a circuit diagram illustrating a method of mixing a local oscillation signal generated by the local oscillation frequency generation apparatus 230 and an RF signal amplified by the low noise amplification unit 211, which is performed by the demodulator 212 of FIG. 2. Referring to FIG. 4, the demodulator 212 includes an I mixer 212a and a Q mixer 212b. The I mixer 212a mixes an I local oscillation signal LOI output by the local oscillation frequency generation apparatus 230 with an RF signal output by the low noise amplification unit 211, thereby obtaining a I baseband signal BBI. The Q mixer 212b mixes a Q local oscillation signal output by the local oscillation frequency generation apparatus 230 with the RF signal output by the low noise amplification unit 211, thereby obtaining a Q baseband signal BBQ.

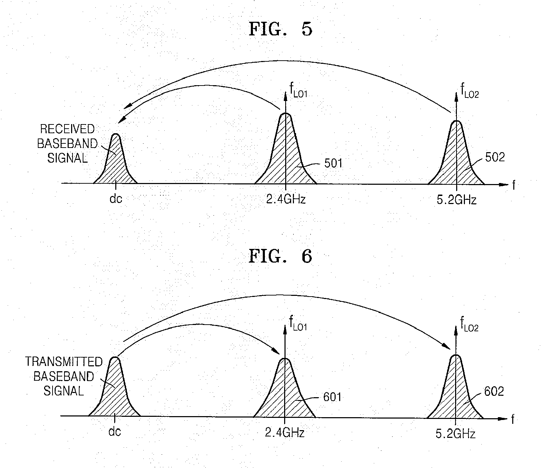

FIG. 5 is a diagram illustrating a method of converting an RF signal received a wireless transceiver into a baseband signal according to an exemplary embodiment of the present invention, and FIG. 6 is a diagram illustrating a method of converting a baseband signal to be transmitted by a wireless transceiver into an RF signal according to an exemplary embodiment of the present invention.

Referring to FIG. 5, when an RF signal 501 having a center frequency of 2.5 GHz is received, the local oscillation frequency generation apparatus 230 generates a first local oscillation signal having a frequency fL01 which is the same as the frequency of the RF signal 501, and the demodulator 212 converts the RF signal 501 into a baseband signal by mixing the received signal with the first local oscillation signal generated by the local oscillation frequency generation apparatus 230. If an RF signal 502 having a center frequency of 5.2 GHz is received, the local oscillation frequency generation apparatus 230 generates a second local oscillation signal having a frequency fL02 which is the same as the frequency of the RF signal 502, and the demodulator 212 converts the RF signal 502 into a baseband signal by mixing the RF signal 502 with the second local oscillation signal generated by the local oscillation frequency generation apparatus 230. Here, each of the local oscillation frequencies fLO1 and fLO2 can be generated by appropriately choosing one of the first through n-th VCOs VCO1 through VCOn and one of the first, second, and third switches 233, 235, and 238 of the local oscillation frequency generation apparatus 230.

Referring to FIG. 6, in order that a baseband signal can be transmitted by being carried by a carrier wave having a center frequency of 2.4 GHz, the local oscillation frequency generation apparatus 230 outputs a first local oscillation signal having a frequency of 2.4 GHz under the control of the control unit 240, and the modulator 224 converts the baseband signal into an RF signal having a frequency of 2.4 GHz by mixing the baseband signal with the first local oscillation signal. Likewise, in order that a baseband signal can be transmitted by being carried by a carrier wave having a center frequency of 5.2 GHz, the local oscillation frequency generation apparatus 230 outputs a second local oscillation signal having a frequency of 5.2 GHz under the control of the control unit 240, and the modulator 224 converts the baseband signal into an RF signal having a frequency of 5.2 GHz by mixing the baseband signal with the second local oscillation signal.

As described above, according to the present invention, it is possible to implement a wireless transceiver having a simple structure and reduce the number of electronic parts and devices constituting a wireless transceiver by enabling a single local oscillation frequency generation apparatus to provide a plurality of local oscillation signals belonging to different frequency bands for modulating/demodulating RF signals. In addition, it is possible to minimize the chip area of a wireless transceiver by implementing an RF signal processing module as a single chip.

Although a few preferred embodiments have been shown and described, it will be appreciated by those skilled in the art that various changes and modifications might be made without departing from the scope of the invention, as defined in the appended claims.

Attention is directed to all papers and documents which are filed concurrently with or previous to this specification in connection with this application and which are open to public inspection with this specification, and the contents of all such papers and documents are incorporated herein by reference.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings) may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment(s). The invention extends to any novel one, or any novel combination, of the features disclosed in this specification (including any accompanying claims, abstract and drawings), or to any novel one, or any novel combination, of the steps of any method or process so disclosed.

## Claims

1. A local oscillation frequency generation apparatus comprising:
an oscillation unit (232) which comprises a plurality of voltage controlled oscillators (VCOs) that are operable to generate a plurality of local oscillation signals having different frequencies for modulating or demodulating radio frequency (RF) signals in a plurality of frequency bands;
a phase locked loop (PLL) (231) which is operable to lock the frequencies of the local oscillation signals generated by the VCOs;
a first switch (233) which is operable to select a local oscillation signal among the local oscillation signals generated by the VCOs according to a frequency band of an RF signal;
a frequency conversion unit (234) which is operable to convert the frequency of the local oscillation signal selected by the first switch (233); and
a phase shift unit (237) which is operable to generate an in-phase local oscillation signal and a quadrature-phase local oscillation signal by shifting a phase of a signal output by the frequency conversion unit (234) and to output the in-phase local oscillation signal and the quadrature-phase local oscillation signal.

2. The oscillation frequency generation apparatus of claim 1, wherein the frequency conversion unit (234) comprises:
a frequency doubler (234b) which is operable to multiply the frequency of the local oscillation signal selected by the first switch (233) by a first integer; and
at least one divider (234a,234c) which is operable to divide the frequency of the local oscillation signal selected by the first switch (233) by a second integer.

3. The oscillation frequency generation apparatus of claim 1, wherein the frequency conversion unit (234) comprises:
a first divider (234a) which is operable to divide the frequency of the local oscillation signal selected by the first switch (233) by an integer L;
a second divider (234c) which is operable to divide the frequency of the local oscillation signal selected by the first switch (233) by an integer N;
a frequency doubler (234b) which is operable to multiply the frequency of the local oscillation signal selected by the first switch (233) by an integer M; and
a second switch (235) which is operable to select a signal among a signal output by the first divider (234a) and a signal output by the frequency doubler (234b) in consideration of the frequency band of the RF signal; and
wherein the oscillation frequency generation apparatus further comprises a multiplier (236) which is operable to multiply the signal selected by the second switch (235) by a signal output by the second divider (234c).

4. The oscillation frequency generation apparatus of claim 3, wherein the phase shift unit (237) comprises:
a first phase shifter (237a) which is operable to shift a phase of the signal output by the first divider (234a) to generate an in-phase local oscillation signal and a quadrature-phase local oscillation signal;
a second phase shifter (237b) which is operable to shift a phase of the signal output by the frequency doubler (234b) to generate an in-phase local oscillation signal and a quadrature-phase local oscillation signal; and
a third phase shifter (237c) which is operable to shift a phase of a signal output by the multiplier (236) to generate an in-phase local oscillation signal and a quadrature-phase local oscillation signal.

5. The oscillation frequency generation apparatus of claim 4 further comprising:
a third switch (238) which is operable to select the in-phase local oscillation signal and the quadrature-phase local oscillation signal generated by one of the first phase shifter (237a), the second phase shifter (237b) and the third phase shifter (237c); and
an output buffer (239) which is operable to buffer the in-phase local oscillation signal and the quadrature-phase local oscillation signal selected by the third switch (238).

6. The oscillation frequency generation apparatus of any preceding claim, further comprising an output buffer (239) which is operable to buffer a local oscillation signal whose phase has been shifted by the phase shift unit (237).

7. The oscillation frequency generation apparatus of any preceding claim, further comprising a control unit (240) which is operable to control the oscillation unit (232), the PLL (231), the first switch (233), the frequency conversion unit (234), and the phase shift unit (237)

8. A wireless transceiver comprising:
an antenna (202) which is operable to transmit or receive radio frequency (RF) signals in a plurality of frequency bands;
a reception unit (210) which is operable to receive a first RF signal received by the antenna (202) and outputs a baseband signal;
a transmission unit (220) which is operable to convert the baseband signal into a second RF signal and to output the second RF signal to the antenna (202) to be transmitted;
a local oscillation frequency generation apparatus (230) which outputs a plurality of local oscillation signals having different frequencies, the local oscillation signals comprising a first local oscillation signal belonging to the same frequency band as the first RF signal received by the reception unit (210) or a second local oscillation signal belonging to the same frequency band as the second RF signal output by the transmission unit (220).

9. The wireless transceiver of claim 8, wherein the local oscillation frequency generation apparatus (230) comprises:
an oscillation unit (232) which comprises a plurality of voltage controlled oscillators (VCOs) that are operable to generate the local oscillation signals having the different frequencies for modulating or demodulating RF signals in a plurality of frequency bands;
a phase locked loop (PLL) (231) which is operable to lock the frequencies of the local oscillation signals generated by the VCOs;
a first switch (233) which is operable to select a local oscillation signal among the local oscillation signals generated by the VCOs according to a frequency band of an RF signal;
a frequency conversion unit (234) which is operable to convert the frequency of the local oscillation signal selected by the first switch (233); and
a phase shift unit (237) which is operable to generate an in-phase local oscillation signal and a quadrature-phase local oscillation signal by shifting a phase of a signal output by the frequency conversion unit (234) and to output the in-phase local oscillation signal and the quadrature-phase local oscillation signal.

10. The wireless transceiver of claim 9, wherein the frequency conversion unit (234) comprises:
a frequency doubler (234b) which is operable to multiply the frequency of the local oscillation signal selected by the first switch (233) by a first integer;
at least one divider which is operable to divide the frequency of the local oscillation signal selected by the first switch (233) by a second integer.

11. The wireless transceiver of claim 9, wherein the frequency conversion unit (234) comprises:
a first divider (234a) which is operable to divide the frequency of the local oscillation signal selected by the first switch (233) by an integer L;
a second divider (234c) which is operable to divide the frequency of the local oscillation signal selected by the first switch (233) by an integer N;
a frequency doubler (234b) which is operable to multiply the frequency of the local oscillation signal selected by the first switch (233) by an integer M; and
a second switch (235) which is operable to select a signal among a signal output by the first divider (234a) and a signal output by the frequency doubler (234b) in consideration of the frequency band of the RF signal; and
wherein the local oscillation frequency generation apparatus (230) further comprises a multiplier (236) operable to multiply the signal selected by the second switch (235) by a signal output by the second divider (234c).

12. The wireless transceiver of claim 11, wherein the phase shift unit (237) comprises:
a first phase shifter (237a) which is operable to shift a phase of the signal output by the first divider (234a) to generate an in-phase local oscillation signal and a quadrature-phase local oscillation signal;
a second phase shifter (237b) which is operable to shift a phase of the signal output by the frequency doubler (234b) to generate an in-phase local oscillation signal and a quadrature-phase local oscillation signal; and
a third phase shifter (237c) which is operable to shift a phase of a signal output by the multiplier (236) to generate an in-phase local oscillation signal and a quadrature-phase local oscillation signal.

13. The wireless transceiver of claim 11 further comprising:
a third switch (238) which is operable to select the in-phase local oscillation signal and the quadrature-phase local oscillation signal generated by one of the first phase shifter (237a), the second phase shifter (237b) and the third phase shifter (237c); and
an output buffer (239) which is operable to buffer the in-phase local oscillation signal and the quadrature-phase local oscillation signal selected by the third switch (238).

14. The wireless transceiver of any one of claims 8 to 13, wherein the reception unit (210) comprises:
a low noise amplification unit which comprises at least one low noise amplifier that is operable to amplify RF signals belonging to different frequency bands;
a demodulator which is operable to convert an RF signal output by the low noise amplification unit into a baseband signal by mixing the RF signal with a local oscillation signal provided by the local oscillation frequency generation apparatus (230);
at least one voltage controlled amplifier which is operable to adjust a level of a baseband signal output by the demodulator; and
a low band pass filter which is operable to remove high frequency noise from a signal output by the voltage controlled amplifier.

15. The wireless transceiver of any one of claims 8 to 14, wherein the transmission unit (220) comprises:
a low band pass filter which is operable to remove high frequency noise from a transmitted signal;
a voltage controlled amplifier which is operable to adjust a level of a signal output by the low band pass filter;
a modulator which is operable to convert a signal output by the voltage controlled amplifier into an RF signal by mixing the output signal of the voltage controlled amplifier with a local oscillation signal provided by the local oscillation frequency generation apparatus (230); and
a power amplifier which is operable to amplify an RF signal output by the modulator.

16. The wireless transceiver of any one of claims 8 to 15, further comprising a control unit (240) which is operable to control the reception unit (210), the transmission unit (220), and the local oscillation frequency generation apparatus (230).
